(19) Europäisches Patentamt / European Patent Office / Office européen des brevets

(11) **EP 4 607 778 A1**

(12) **EUROPÄISCHE PATENTANMELDUNG**

(43) Veröffentlichungstag:
**27.08.2025   Patentblatt 2025/35**

(21) Anmeldenummer: **24159376.3**

(22) Anmeldetag: **23.02.2024**

(51) Internationale Patentklassifikation (IPC):
*H02M 1/00* (2006.01)      *H02H 3/16* (2006.01)
*H02M 1/32* (2007.01)      *H02M 3/155* (2006.01)
*H02M 3/158* (2006.01)      *H02M 7/04* (2006.01)
*H02M 7/487* (2007.01)

(52) Gemeinsame Patentklassifikation (CPC):
**H02M 1/007; H02H 3/16; H02M 1/32; H02M 3/155; H02M 3/1582; H02M 7/04; H02M 7/487**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: FRONIUS INTERNATIONAL GmbH
**4643 Pettenbach (AT)**

(72) Erfinder:
• **Hirt, David**
  **4643 Pettenbach (AT)**
• **Nagelmüller, Martin**
  **4643 Pettenbach (AT)**
• **Wallisch, Gerhard**
  **4643 Pettenbach (AT)**
• **Mörtenhuber, Martin**
  **4643 Pettenbach (AT)**

(74) Vertreter: **Patentanwälte Pinter & Weiss OG**
**Prinz-Eugen-Straße 70**
**1040 Wien (AT)**

(54) **TRAFOLOSER UMRICHTER MIT SCHUTZ VOR ERDSCHLUSSFEHLERN**

(57)    Um einen Umrichter (1) wirkungsvoll vor den Auswirkungen eines Erdschlussfehlers (10) zu schützen, ist vorgesehen, dass der Umrichter (1) ein in einer positiven Verbindungsleitung (V+) des Umrichters (1) angeordnetes unidirektionales Schaltelement (DT1) umfasst, das einen elektrischen Stromfluss in einer ersten Stromflussrichtung vom AC-Anschluss (2) zum DC-Anschluss (3) leitet und entgegen der ersten Stromflussrichtung sperrt, und/oder der Umrichter (1) ein in der negativen Verbindungsleitung (V-) des Umrichters (1) angeordnetes unidirektionales Schaltelement (DT2) umfasst, das einen elektrischen Stromfluss in einer zweiten Stromflussrichtung vom DC-Anschluss (3) zum AC-Anschluss (2) leitet und entgegen der zweiten Stromflussrichtung sperrt.

Fig. 2

EP 4 607 778 A1

**Beschreibung**

Die gegenständliche Erfindung betrifft einen gegen Erdschlussfehler geschützten Umrichter mit einem DC-Anschluss und einem AC-Anschluss, wobei der AC-Anschluss mit einem AC-Leistungsteil des Umrichters verbunden ist, indem der AC-Leistungsteil zumindest einen Schaltzweig mit zumindest zwei in Serie geschalteten Halbleiterschaltern aufweist, zwischen denen ein elektrischer Pol gebildet ist, der mit dem AC-Anschluss verbunden ist, wobei im Umrichter ein Gleichspannungszwischenkreis mit zumindest einen Zwischenkreiskondensator vorgesehen ist und der Gleichspannungszwischenkreis mit dem AC-Leistungsteil und dem DC-Anschluss verbunden ist. Die Erfindung betrifft auch ein Verfahren zum Schützen eines Umrichters vor Erdschlussfehlern.

Leistungselektronische Umrichter finden in vielen Bereichen Anwendungen. Ein Umrichter kann als Gleichrichter oder als Wechselrichter ausgeführt sein oder betrieben werden. Ein bidirektionaler Umrichter kann beispielsweise sowohl als Gleichrichter (in die eine Energieflussrichtung) und als Wechselrichter (in die andere Energieflussrichtung) betrieben werden. Prominente Beispiele sind Wechselrichter in Photovoltaikanlagen (PV-Anlagen) oder Gleichrichter in Ladegeräten von Elektrofahrzeugen. Ein als Wechselrichter betriebener Umrichter hat in solchen Anwendungen die Aufgabe, eine elektrische Gleichspannung (beispielsweise aus PV-Modulen oder aus einer elektrischen Speicherbatterie) in eine elektrische Wechselspannung (insbesondere eines elektrischen Verteilnetzes) zu wandeln, um elektrische Energie in das elektrische Verteilnetz einzuspeisen. Der als Gleichrichter betriebene Umrichter kann aber auch die Aufgabe haben, elektrische Energie aus einem elektrischen Verteilnetz (also eine Wechselspannung) in eine Gleichspannung zu wandeln, um eine Speicherbatterie, z.B. eines Elektroautos oder einer sogenannten Hybrid-PV-Anlage mit Speicher, zu laden. Umrichter in solchen Anwendungen sind aus Sicherheitsgründen üblicherweise mit einem Transformator ausgeführt, der die AC-Seite (Wechselspannung) des Umrichters von der DC-Seite (Gleichspannung) galvanisch trennt. So kann ein (Fehler- )Gleichstrom einen Transformator nicht "überwinden", da dessen magnetisches Kopplungsprinzip Wechselströme erfordert. Weiters kann mittels galvanischer Trennung das elektrische Referenzpotential der DC-Seite frei gewählt werden, beispielsweise mit Erde als Referenzpotential.

Umrichter ohne Transformator, sogenannte "trafolose" Umrichter, haben den Vorteil, dass gegenüber Umrichtern mit Transformator durch den Wegfall des Transformators Kosten und Bauraum eingespart werden kann und auch der Wirkungsgrad höher ist. Allerdings kann es bei Verwendung eines trafolosen Umrichters im Falle eines spontanen satten Erdschlusses ("bolted earth fault") durch eine entstehende vom AC-Netz oder von der angeschlossenen DC-Komponente getriebene Erdfehlerstromschleife zu schweren Schäden am Umrichter kommen. Als unmittelbarer Folgefehler kann es auch auf der DC-Seite zu schweren Schäden, wie einem Batteriekurzschluss, kommen. Im Falle einer kurzgeschlossenen Batterie können aufgrund von niedrigen Batterie-Innenwiderständen elektrische Fehlerströme im Kiloamperebereich und darüber entstehen, die sogar Personenschäden zur Folge haben können. Aufgrund dessen werden bisher in solchen Anwendungen, insbesondere in Ladegeräten bei Elektrofahrzeugen, keine transformatorlosen Wechselrichter eingesetzt, oder es sind gesonderte Maßnahmen erforderlich, um die Auswirkungen solcher Erdschlussfehler zu unterdrücken. Es wäre denkbar, DC-Sicherungen oder schnellere pyrotechnische Trennelemente ("Pyrofuse") einzusetzen. Solche DC-Sicherungen sind aber schwierig zu dimensionieren, weil deren Auslösezeit stromabhängig ist. Außerdem wären solche Sicherungselemente nach Auslösung mittels Serviceeinsatz zu tauschen, was einen mitunter langen Anlagenausfall nach sich ziehen würde und in vielen Anwendungen unpraktikabel wäre und daher nicht erwünscht ist. Höchstwahrscheinlich würden aber bei satten Erdfehlern trotz DC-Sicherungselementen trotzdem zumindest der AC-Leistungsteil des Wechselrichters beschädigt werden.

In Umrichtern ist oftmals ein Überstromschutz implementiert, der einen zulässigen maximalen AC-Strom überwacht. Wird der zulässige AC-Strom erreicht oder überschritten wird der Umrichter abgeschaltet, um Schäden zu verhindern. Ein derartiger Überstromschutz wäre im Erdfehlerfall aber nicht wirksam, weil diese Abschaltung in der Regel nur gegen umrichterinterne Fehlerströme wirksam ist und Erdfehlerströme trotzdem lange genug weiter einwirken können, sodass es trotzdem zu Geräteschäden kommt.

Es besteht daher Bedarf, einen trafolosen Umrichter anzugeben, der die unmittelbaren Folgen von möglichen Erdschlussfehlern von vornherein vermeidet.

Diese Aufgabe wird für einen eingangs genannten Umrichter erfindungsgemäß mit den Merkmalen der unabhängigen Ansprüche gelöst. Ein solches unidirektionales Schaltelement, vorzugsweise eine Diode, stört bei einem undirektionalen Umrichter mit Energiefluss vom AC-Anschluss zum DC-Anschluss den Normalbetrieb nicht, weil das unidirektionale Schaltelement in der positiven und/oder negativen Verbindungsleitung in dieser Energieflussrichtung leitet. Im Falle eines Erdfehlerstromkreises über den Gleichspannungszwischenkreis würde das undirektionale Schaltelement sperren, wenn am Gleichspannungszwischenkreis eine Spannung anliegt, die größer als die Zwischenkreisspannung ist. Damit kann ein Überladen des Gleichspannungszwischenkreises als Folge eines derartigen Erdschlussfehlers verhindert werden.

Vorteilhaft ist parallel zum unidirektionalen Schaltelement in der positiven Verbindungsleitung ein unidirektional leitender Halbleiterschalter vorgesehen, der die positive Verbindungleitung bei offenem unidirektional leitenden Halbleiterschalter unterbricht und bei geschlossenem unidirektional leitenden Halbleiterschalter in der ersten Stromflussrichtung sperrt und entgegen der ersten Stromflussrichtung leitend durchschaltet und/oder parallel zum unidirektionalen Schaltelement in der negativen Verbindungsleitung ein unidirektional leitender Halbleiterschalter vorgesehen ist, der die negative Verbindungleitung bei offenem unidirektional leitenden Halbleiterschalter unterbricht und bei geschlossenem unidirektional leitenden Halbleiterschalter in der zweiten Stromflussrichtung sperrt und entgegen der zweiten Stromflussrichtung leitend durchschaltet. Im Umrichter ist ferner ein Spannungssensor vorgesehen, der eine Zwischenkreisspannung des Gleichspannungszwischenkreises oder eine Spannung an einem Zwischenkreiskondensator des Gleichspannungszwischenkreises erfasst und eine Steuereinheit vorgesehen, die eingerichtet ist, den zusätzlichen unidirektional leitenden Halbleiterschalter in der positiven Verbindungsleitung und/oder den zusätzlichen unidirektional leitenden Halbleiterschalter in der negativen Verbindungsleitung permanent zu öffnen, wenn die erfasste Zwischenkreisspannung oder die erfasste Spannung an einem Zwischenkreiskondensator des Gleichspannungszwischenkreises einen vorgegebenen Grenzwert erreicht. Die Kombination aus weiterem unidirektional leitenden Halbleiterschalter mit unidirektionalem Schaltelement ermöglicht einen bidirektionalen Betrieb des Umrichters, weil das unidirektionale Schaltelement durch den geschlossenen Halbleiterschalter überbrückt wird. Besteht die Gefahr des Überladens des Gleichspannungszwischenkreises kann das unidirektionale Schaltelement aktiviert werden, in dem der weitere Halbleiterschalter geöffnet wird. Das unidirektionale Schaltelement unterbricht dann einen möglichen Erdfehlerstromkreis im Erdschlussfehlerfall und sorgt für den Schutz des Umrichters gegen den Erdschlussfehler. Zusätzlich oder alternativ kann im Umrichter ein Stromsensor vorgesehen sein, der einen im Umrichter fließenden elektrischen Strom erfasst und/oder ein Spannungssensor vorgesehen sein, der eine an einer Komponente des Umrichters anliegende elektrische Spannung erfasst, wobei die Steuereinheit eingerichtet ist, anhand des erfassten elektrischen Stromes und/oder der erfassten elektrischen Spannung einen Erdschlussfehler zu erkennen und die Steuereinheit ferner eingerichtet ist, den weiteren Halbleiterschalter im Falle eines erkannten Erdschlussfehlers permanent zu öffnen. Im Falle eines Erdschlussfehlers kann der zusätzliche unidirektional leitende Halbleiterschalter geöffnet werden, auch unabhängig von einer bestimmten Zwischenkreisspannung oder einer bestimmten Spannung an einem Zwischenkreiskondensator.

Es ist vorteilhaft, wenn in der positiven Verbindungsleitung und/oder in der negativen Verbindungsleitung ein DC/DC-Wandler geschaltet ist, wobei der DC/DC-Wandler zumindest einen Halbleiterschalter mit einer parallel dazu geschalteten Freilaufdiode umfasst und die Steuereinheit den zumindest einen Halbleiterschalter des jeweiligen DC/DC-Wandlers im Falle eines erkannten Erdschlussfehlers permanent öffnet, wenn die erfasste Zwischenkreisspannung einen vorgegebenen Grenzwert erreicht. Damit kann ein eventuell vorhandenes DC-Leistungsteil im Umrichter auch für den Schutz gegen Erdschlussfehlern genutzt werden. Ein Halbleiterschalter des DC-Leistungsteils wird im Normalbetrieb in vorgesehener Weise mit einer bestimmten Schaltfrequenz geöffnet und geschlossen. Im Erdschlussfehlerfall wird diese mit der Schaltfrequenz durchgeführte Öffnen und Schließen unterbrochen und der Halbleiterschalter wird permanent geöffnet. Der Halbleiterschalter des DC-Leistungsteils wird damit zum weiteren Halbleiterschalter zum Schutz gegen Erdschlussfehler. Die ohnehin zwingend vorhandene Freilaufdiode des Halbleiterschalters des DC-Leistungsteils wird gleichzeitig als unidirektionales Schaltelement zum Schutz gegen Erdschlussfehlern verwendet. In einer solchen Ausführung bedarf es keiner zusätzlichen Schaltelemente, wie zusätzlicher Halbleiterschalter oder unidirektionale Schaltelemente.

Die gegenständliche Erfindung wird nachfolgend unter Bezugnahme auf die Figuren 1 bis 4 näher erläutert, die beispielhaft, schematisch und nicht einschränkend vorteilhafte Ausgestaltungen der Erfindung zeigen. Dabei zeigt

Fig.1 die Problematik eines Erdschlussfehlers in einem trafolosen Umrichter,
Fig.2 und 3 jeweils eine Ausführung eines trafolosen Umrichters mit erfindungsgemäßem Schutz gegen Erdschlussfehler und
Fig.4 einen DC/DC-Wandler in einem trafolosen Umrichter dessen Bauelemente zum erfindungsgemäßen Schutz gegen Erdschlussfehler verwendet werden.

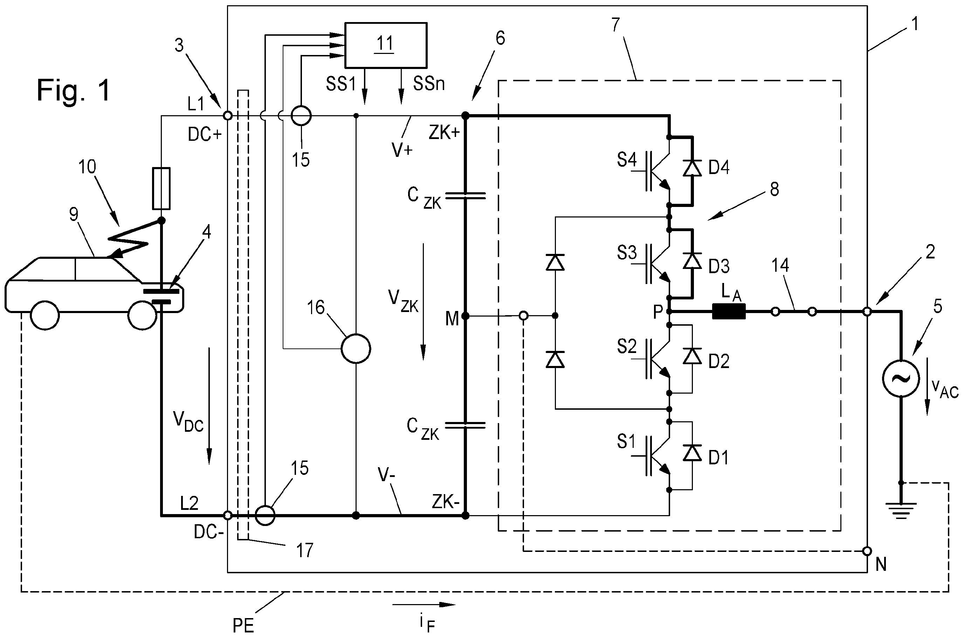

Anhand der Fig.1 soll nachfolgend das Problem eines Erdschlusses bei trafolosen Umrichtern 1 erläutert werden. In einem trafolosen Umrichter 1 gibt es keine galvanische Trennung mittels eines Transformators zwischen der AC-Seite und der DC-Seite des Umrichters 1.
Die Erfindung betrifft Spannungszwischenkreis-Umrichter, also Umrichter mit einem Gleichspannungszwischenkreis. In weitere Folge wird aber anstelle von Spannungszwischenkreis-Umrichter nur mehr der Begriff Umrichter verwendet.
Fig.1 zeigt einen trafolosen Umrichter 1 mit einem Wechselstrom (AC)-Anschluss 2 und einem Gleichstrom (DC)-Anschluss 3. Der DC-Anschluss 3 hat einen positiven DC-Anschlusspol DC+ und einen negativen DC-Anschlusspol DC-. Am DC-Anschluss 3 wird in Verwendung des Umrichters 1 über den positiven DC-Anschlusspol DC+ und einer ersten mit dem positiven DC-Anschlusspol DC+ verbundenen Leitung L1 und über den negativen DC-Anschlusspol DC- und einer zweiten mit dem negativen DC-Anschlusspol DCverbundenen Leitung L2 eine DC-Komponente 4 angeschlossen. In einer Leitung L1, L2 kann auch eine DC-Sicherung angeordnet sein, wie in Fig.1 dargestellt. Die DC-Komponente 4 kann eine DC-Quelle sein, wie eine elektrische Speicherbatterie oder eine PV-Anlage, oder eine DC-Senke, wie eine elektrische Speicherbatterie. Im Ausführungsbeispiel der Fig.1 ist die DC-Komponente 4 eine Speicherbatterie eines Fahrzeugs 9. Im Falle eines bidirektionalen Umrichters 1 kann der Betriebsmodus der DC-Komponente 4 auch zwischen einer DC-Quelle und DC-Senke wechseln. Am DC-Anschluss 3 liegt im Betrieb eine DC-Spannung $V_{DC}$ an. Am AC-Anschluss 2 ist in Verwendung des Umrichters 1 ein AC-Netz 5, wie ein elektrisches Versorgungsnetz, mit einer AC-Spannung $v_{AC}$, angeschlossen. Der Umrichter 1 ermöglicht damit einen elektrischen Energiefluss von der DC-Seite zur AC-Seite oder umgekehrt. Bei einem bidirektionalen Umrichter 1 sind beide Energieflussrichtungen möglich.

In Fig.1 ist auch ein optionales AC-seitiges Trennelement 14, wie ein AC-Relais oder Schalter, in geschlossenem Zustand dargestellt, mit dem der Umrichter 1 bedarfsweise vom AC-Netz 5 getrennt werden kann, beispielsweise durch entsprechende Ansteuerung des Trennelements 14 von der Steuereinheit 11 des Umrichters 1.

Details hinlänglich bekannter und optional vorgesehener weiterer Schaltungskomponenten eines Umrichters 1, wie ein Eingangsfilter, ein Ausgangsfilter oder ein DC-seitiges Trennelement, sind in Fig.1 nicht dargestellt, weil für die Erfindung nicht von Bedeutung.

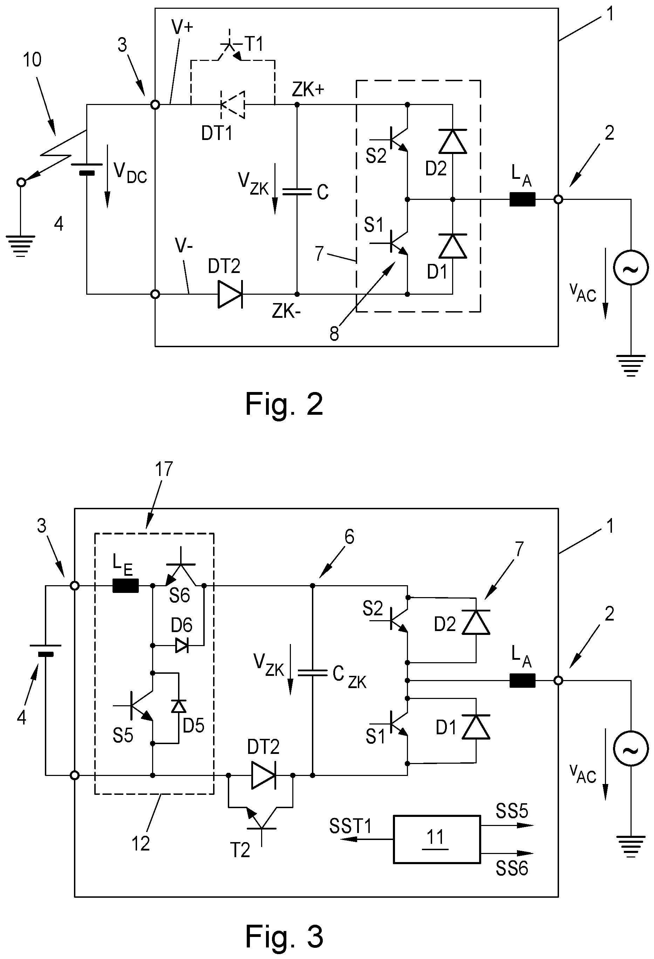

Ein Umrichter 1 hat einen Gleichspannungszwischenkreis 6 mit zumindest einem Zwischenkreiskondensator $C_{ZK}$ zwischen einem positiven Zwischenkreisanschlusspol ZK+ und einem negativen Zwischenkreisanschlusspol ZK-. Der Gleichspannungszwischenkreis 6 ist über eine positive Verbindungsleitung V+ und eine negative Verbindungsleitung V- im Umrichter 1 an den DC-Anschluss 3 geschaltet, sodass am zumindest einen Zwischenkreiskondensator $C_{ZK}$ die am DC-Anschluss 3 anliegende DC-Spannung $V_{DC}$ anliegt. Hierfür ist der positive Anschlusspol DC+ des DC-Anschlusses 3 mit dem positiven Zwischenkreisanschlusspol ZK+ verbunden und der negativen Zwischenkreisanschlusspol ZK- mit dem negativen Anschlusspol DC- des DC-Anschlusses 3. Diese Verbindung muss aber nicht zwingend direkt sein, sondern es könnten zwischen dem positiven Zwischenkreisanschlusspol ZK+ und dem positiven Anschlusspol DC+, sowie zwischen dem negativen Zwischenkreisanschlusspol ZK- und dem negativen Anschlusspol DC- weitere Schaltungskomponenten 17 vorgesehen sein, wie beispielsweise in der Ausführung der Fig.3. In gewissen Wechselrichtertopologien können auch mehrere Zwischenkreiskondensatoren $C_{ZK}$ vorgesehen sein, beispielsweise in Serie geschaltet, wie in der Ausgestaltung der Fig.1 mit zwei in Serie geschalteten Zwischenkreiskondensatoren $C_{ZK}$ zwischen den Zwischenkreisanschlusspolen ZK+, ZK-.

Im Falle einer DC-seitigen Schaltungskomponente 17, wie eines DC-seitigen Filters oder eines DC-seitigen DC/DC-Wandlers 12, liegt die DC-Spannung $V_{DC}$ am DC-Eingang 3 natürlich nicht direkt am Gleichspannungszwischenkreis 6 an, sondern indirekt über die DCseitige Schaltungskomponente 17, wie in Fig.1 gestrichelt angedeutet.

Der Umrichter 1 besitzt auch eine Halbleiter-Baugruppe, den sogenannten AC-Leistungsteil 7, der mit dem AC-Anschluss 2 verbunden ist. Der AC-Leistungsteil 7 umfasst pro Phase zumindest einen Schaltzweig 8. Im Schaltzweig 8 sind zumindest zwei in Serie geschaltete Halbleiterschalter S1, ..., Sn, wie IGBT- oder MOSFET-Transistoren, vorgesehen (in Fig.1 n=4), wobei der Schaltzweig 8 parallel an den Zwischenkreis 6 geschaltet ist. Ein zwischen Halbleiterschaltern S1, ..., Sn des Schaltzweiges 8 vorgesehener elektrischer Pol P ist, üblicherweise über eine Ausgangsdrossel $L_A$, mit dem AC-Anschluss 2 verbunden, und bildet damit eine Phase der AC-Spannung $v_{AC}$ am AC-Anschluss 2. Parallel zu den Halbleiterschaltern S1, ..., Sn sind bekanntermaßen im AC-Leistungsteil 7 stets Freilaufdioden D1, ..., D4 geschaltet, um die Halbleiterschalter S1, ..., Sn gegen Rückwärts-Überspannung zu schützen.

Es gibt Umrichtertopologien, in denen pro Phase mehrere Schaltzweige 8 vorgesehen sind, wobei die Pole P dieser Schaltzweige miteinander und mit dem AC-Anschluss 2 verbunden sind. Solche Umrichtertopologien werden auch als verschachtelte ("interleaved") Umrichtertopologien bezeichnet.

Der Umrichter 1 ist in Fig.1 lediglich zur Erläuterung als einphasiger Umrichter ausgeführt. Der Umrichter 1 kann aber natürlich auch mehr als eine Phase, insbesondere drei Phasen, haben. Bei einem mehrphasigen Umrichter 1 sind entsprechend der Anzahl an Phasen mehrere Schaltzweige 8 vorgesehen und der AC-Anschluss 2 umfasst eine entsprechende Anzahl von Phasenanschlüssen. Das AC-Netz 5 ist demgemäß ebenfalls mehrphasig ausgeführt.

Die DC-Seite des Umrichters 1 ist damit der Bereich zwischen dem DC-Anschluss 3 und dem Gleichspannungszwischenkreis 6, wobei der Gleichspannungszwischenkreis 6 auch als Teil der DC-Seite gesehen werden kann. Die AC-Seite des Umrichters 1 ist damit der Bereich des AC-Leistungsteils 7.

In der Ausführung der Fig.1 ist eine bekannte NPC ("neutral point clamped") Umrichtertopologie gezeigt. In dieser Umrichtertopologie sind pro Schaltzweig 8 zumindest vier Halbleiterschalter S1, S2, S3, S4 in Serie geschaltet. Der Punkt zwischen den beiden oberen Halbleiterschalter S3, S4 und den beiden unteren Halbleiterschaltern S1, S2 ist jeweils über eine Diode (oder einem weiteren Halbleiterschalter) mit einem Mittelpunkt M zwischen den beiden Zwischenkreiskondensatoren $C_{ZK}$ verbunden. Eine solche Umrichtertopologie ermöglicht bekanntermaßen die Erzeugung von mehr als zwei elektrischen Ausgangspotentialen am jeweiligen Pol P.

Allgemein gilt für einen Umrichter 1, dass ein Mittelpunkt M zwischen zwei Zwischenkreiskondensatoren $C_{ZK}$ des Gleichspannungszwischenkreises 6 am Umrichter 1 optional auch als Neutralpunkt N nach außen geführt sein kann, um daran eine Neutralleitung des AC-Netzes 5 anzuschließen, wie beispielsweise in der Ausführung in Fig.1 gestrichelt angedeutet.

Es sei angemerkt, dass die Umrichtertopologie des trafolosen Umrichters 1 für das grundlegende Problem und auch für die Erfindung aber ohne Bedeutung ist.

Im Betrieb des Umrichters 1 werden die Halbleiterschalter S1, ..., Sn des AC-Leistungsteils 7 in bekannter Weise gemäß bestimmten Vorgaben durch eine Steuereinheit 11 angesteuert und mit einer vorgegebenen Schaltfrequenz geöffnet und geschlossen, um die Zwischenkreisspannung $V_{ZK}$ in die gewünschte AC-Spannung $v_{AC}$ am AC-Anschluss 2 zu wandeln, oder um umgekehrt die AC-Spannung $v_{AC}$ am AC-Anschluss 2 in eine DC-Spannung $V_{DC}$ oder Zwischenkreisspannung $V_{ZK}$ zu wandeln. Die Steuereinheit 11 erzeugt hierzu Steuersignale SS1, ..., SSn für alle Halbleiterschalter S1, ..., Sn des AC-Leistungsteils 7, wie in Fig.1 angedeutet. Über die Steuersignale SS1, ..., SSn wird ein Halbleiterschalter S1, ..., Sn entweder geöffnet oder geschlossen, üblicherweise durch einen bekannten Treiberbaustein (nicht dargestellt), wie ein Gate-Driver, der die Steuersignale SS1, ..., SSn empfängt und für die Halbleiterschalter S1, ..., Sn geeignet aufbereitet. Die Schaltfrequenz der Halbleiterschalter S1, ..., Sn eines AC-Leistungsteils 7 eines Umrichters 1 liegt typischerweise in der Größenordnung von 1kHz bis 100kHz.

Im Ausführungsbeispiel der Fig.1 ist der Umrichter 1 beispielsweise in einem bidirektionalen Ladegerät für ein Elektrofahrzeug 9 (was auch ein Hybridfahrzeug umfasst) vorgesehen. Dabei kann es sich um ein Onboard Ladegerät, das im Fahrzeug 9 verbaut ist, handeln, oder auch um ein vom Fahrzeug 9 getrenntes, externes Ladegerät. Das Ladegerät ist an ein AC-Netz 5 angeschlossen, beispielsweise ein einphasiges 50Hz, 230V Wechselspannungsnetz und lädt oder entlädt eine Speicherbatterie des Fahrzeugs 9 als DC-Komponente 4, die über ein Ladekabel (mit den Leitungen L1, L2) mit dem Umrichter 1 verbunden ist. Ein bidirektionales Ladegerät ist beispielsweise erforderlich in Konzepten, in denen die Speicherbatterie des Fahrzeugs 9 auch als elektrische Versorgung, also als DC-Quelle, beispielsweise in einer PV-Inselanlage, verwendet werden soll. Damit kann die Speicherbatterie beispielsweise auch als Energieversorgung eines Hauses verwendet werden, um den Energieautarkiegrad zu erhöhen.

Aufgrund von Sicherheitsvorschriften ist die Fahrzeugkarosserie beim Laden geerdet und damit an einen Erdleiter PE angeschlossen. Im Normalfall ist die Fahrzeugkarosserie elektrisch isoliert von den elektrischen Komponenten des Umrichters 1. In der Darstellung der Fig.1 ist ein satter Erdschlussfehler 10 zwischen der geerdeten Fahrzeugkarosserie und dem Leistungsstromkreis des Umrichters 1 angenommen. Ein solcher Erdschlussfehler 10 kann beispielsweise durch unsachgemäße Handhabung eines Ladekabels und einer dadurch entstehenden Beschädigung des Ladekabels durch einen Benutzer passieren.

Ein solcher Erdschlussfehler 10 kann aber auch in anderen Anwendungen passieren. Beispielsweise könnte ein Erdschlussfehler 10 auch in einer PV-Anlage in Folge einer Beschädigung eines PV-Moduls, dessen Montagerahmen geerdet sein muss, passieren.

In Fig.1 (ohne Verbindung des Mittelpunktes M mit einem Neutralpunkt N) ist ein Erdschlussfehler 10 zwischen der geerdeten Fahrzeugkarosserie und der positiven Leitung L1 angenommen. Der Mittelpunkt M wird oftmals in mehrphasigen Umrichtern 1 nicht nach außen als Neutralpunkt N geführt. Durch den Erdschlussfehler 10 bildet sich während der positiven Halbwelle der AC-Spannung $v_{AC}$ ein Erdfehlerstromkreis (in Fig.1 in dicker Linie eingezeichnet) aus, der über die beiden Freilaufdioden D3, D4 des AC-Leistungsteils 7 (die leitend werden), dem zumindest einen Zwischenkreiskondensator $C_{ZK}$ des Gleichspannungszwischenkreises 6 der negativen Verbindungsleitung V-, den negativen DC-Anschlusspol DC-, der Leitung L2, der DC-Komponente 4 (Speicherbatterie des Fahrzeugs 9) und der Erdleitung PE verläuft. Bei einem Erdschlussfehler an der negativen Leitung L2 würde der Erdfehlerstromkreis von einer negativen Halbwelle der AC-Spannung $v_{AC}$ getrieben und der Erdfehlerstromkreis über die beiden anderen Dioden D1, D2 (die leitend werden) und die positive Verbindungsleitung V+ verlaufen. Die Probleme wären aber dieselben. Aufgrund des Erdschlussfehlers 10 liegen das AC-Netz 5 und die DC-Komponente 4 in Serie am Gleichspannungszwischenkreis 6 an. Die Spannungen der DC-Komponente 4 und des AC-Netzes 5 addieren sich demnach. Damit kann am Gleichspannungszwischenkreis 6 eine Summenspannung anliegen, die größer ist als die aktuelle Zwischenkreisspannung $V_{ZK}$. Der Gleichspannungszwischenkreis 6 würde auf die Summenspannung aufgeladen werden.

Beispielsweise kann der Fall eintreten, dass der Erdschlussfehler 10 eintritt und gleichzeitig die Netzscheitelspannung der AC-Spannung $v_{AC}$ am AC-Anschluss 2 im Bereich des unteren Maximums ist. Dann liegt die Summenspannung der DC-Spannung $V_{DC}$, beispielsweise der Batteriespannung, und der Netzscheitelspannung der AC-Spannung $v_{AC}$ am AC-Anschluss 2 am Gleichspannungszwischenkreis 6 an und es fließt ein Erdfehlerstrom $i_F$ im Erdfehlerstromkreis. Das kann in der Praxis ein großes Problem sein und zur Beschädigung des Umrichters 1 führen.

Es liegt beispielsweise ein dreiphasiges AC-Netz 5 mit einer AC-Spannung $v_{AC}$ mit Netzscheitelspannung von 325V gegen Erde ( $230V \cdot \sqrt{2}$ ) am AC-Anschluss 2 an. Wenn nun eine Fahrzeugbatterie mit 800V Batteriespannung als DC-Komponente 4 angenommen wird und es zu einem Erdschlussfehler 10 kommt, liegen am Gleichspannungszwischenkreis 6 800V+325V= 1125V an und der Gleichspannungszwischenkreis 6 wird auf diese 1125V aufgeladen. Der Gleichspannungszwischenkreis 6 und andere Schaltungsteile sind aber beispielsweise nur auf 1000V ausgelegt (Spannungsfestigkeit der Halbleiterschalter S1, ..., S4 des AC-Leistungsteils 7 und der Zwischenkreiskondensatoren $C_{ZK}$). Der Gleichspannungszwischenkreis 6 wird dieser überhöhten Spannung nicht standhalten und die Zwischenkreiskondensatoren $C_{ZK}$ und unter Umständen auch die Halbleiterschalter S1, ..., S4 des AC-Leistungsteils 7 werden zerstört.

In einem, typischerweise einphasigen, Umrichter 1 mit Mittelpunkt M im Gleichspannungszwischenkreis 6, der als Neutralpunkt N nach außen geführt ist (wie in Fig.1 gestrichelt dargestellt) und am Neutralpunkt N ein Nullleiter, der auf Seite des AC-Netzes 5 üblicherweise auch mit einem Erdleiter PE verbunden wird, angeschlossen ist, kann sich auch ein anderes Fehlerbild bei einem Erdschlussfehler 10 einstellen. In einem Erdschlussfehler 10 an der positiven Leitung L1, wie in Fig.1, kann sich ein Erdfehlerstromkreis vom Neutralpunkt N (der geerdet ist), über den Mittelpunkt M, den unteren Zwischenkreiskondensator $C_{ZK}$ des Gleichspannungszwischenkreises 6, der negativen Verbindungsleitung V-, der Leitung L2 und der DC-Komponenten 4 (Speicherbatterie) ausbilden. Damit liegt die gesamte DC-Spannung $V_{DC}$ am Zwischenkreiskondensator $C_{ZK}$ an und der Zwischenkreiskondensator $C_{ZK}$ wird auf die DC-Spannung $V_{DC}$ aufgeladen. In gleicher Weise kann sich ein derartiger Erdfehlerstromkreis natürlich über den oberen Zwischenkreiskondensator $C_{ZK}$ und die positive Verbindungsleitung V+ ausbilden. Der Zwischenkreiskondensator $C_{ZK}$ in einem geteilten Gleichspannungszwischenkreis 6 mit mehreren seriellen Zwischenkreiskondensatoren $C_{ZK}$ ist aber nicht auf die gesamte DC-Spannung $V_{DC}$ ausgelegt und der Zwischenkreiskondensator $C_{ZK}$ wird dieser überhöhten Spannung nicht standhalten. Wenn eine Fahrzeugbatterie mit 800V Batteriespannung als DC-Komponente 4 angenommen wird und es zu einem solchen Erdschlussfehler 10 kommt, liegen am Zwischenkreiskondensator $C_{ZK}$ 800V, die den Zwischenkreiskondensator $C_{ZK}$ auf diese Spannung aufladen. Der Zwischenkreiskondensator $C_{ZK}$ ist aber beispielsweise nur auf 500V ausgelegt (Spannungsfestigkeit des Zwischenkreiskondensators $C_{ZK}$) und der Zwischenkreiskondensator $C_{ZK}$ wird zerstört.

Um vor solchen Erdschlussfehlern und deren Auswirkungen zu schützen, könnten die Bauelemente des Umrichters 1, insbesondere die Halbleiterschalter S1, ..., S4 des AC-Leistungsteils 7 und den Zwischenkreiskondensator $C_{ZK}$, auf derartige Überspannungen ausgelegt werden, was aber wirtschaftlich nicht sinnvoll wäre, weil der Fehlerfall nur in Ausnahmesituationen und daher äußerst selten auftritt.

Die oben beschriebene Problematik kann grundsätzlich bei jeder trafolosen Umrichtertopologie mit einem AC-Leistungsteil 7 mit Halbleiterschaltern S1, ..., Sn und parallel dazu geschalteten Freilaufdioden D1, ..., D4 oder mit nach außen geführtem Mittelpunkt M des Gleichspannungszwischenkreises auftreten und ist nicht an die in Fig.1 gezeigte Umrichtertopologie oder an eine bestimmte Anwendung, wie in einem Ladegerät eines Elektrofahrzeugs, gebunden. Diese Problematik ist auch ein Grund, warum bisher keine trafolosen Umrichter 1 für derartige Anwendungen eingesetzt wurden.

Um die schädlichen Auswirkungen eines solchen Erdschlussfehlers 10 ohne eine Überdimensionierung des Gleichspannungszwischenkreises 6, oder anderer Komponenten, zu vermeiden wird erfindungsgemäß wie mit Bezugnahme auf Fig.2 beschrieben vorgegangen.

Es wird auf der DC-Seite des Umrichters 1 in die positive Verbindungsleitung V+ (gestrichelt angedeutet in Fig.2) und/oder in die negative Verbindungsleitung V- (wie in Fig.2) ein zusätzliches unidirektionales Schaltelement DT1, DT2, wie eine Diode, geschaltet. Das unidirektionale Schaltelement DT1, DT2 ist damit zwischen dem negativen Zwischenkreisanschlusspol ZK- und dem negativen DC-Anschlusspol DC- und/oder zwischen dem positiven Zwischenkreisanschlusspol ZK+ und dem positiven DC-Anschlusspol DC+ in die negative Verbindungsleitung V- und/oder in die positive Verbindungsleitung V+ geschaltet. Das unidirektionale Schaltelement DT2 ist in der negativen Verbindungsleitung V- so geschaltet, dass es in Richtung des DC-Anschlusses 2 sperrt und in Richtung des AC-Anschlusses 2 leitet. Das unidirektionale Schaltelement DT1 ist in der positiven Verbindungsleitung V+ so geschaltet, dass es in Richtung des AC-Anschlusses 2 sperrt und in Richtung des DC-Anschlusses 3 leitet.

Handelt es sich bei dem Umrichter 1 um ein Ladegerät (onboard oder extern) eines Fahrzeugs 9, dann würde das zusätzliche unidirektionale Schaltelement DT1, DT2 in der positiven Verbindungsleitung V+ und/oder negativen Verbindungsleitung V- im normalen Ladebetrieb immer leitend sein und würde den Ladebetrieb nicht stören. Im Falle eines oben beschriebenen Erdschlussfehlers 10 mit Erdfehlerstromkreis über den Gleichspannungszwischenkreis 6 oder einen Zwischenkreiskondensator $C_{ZK}$ eines Gleichspannungszwischenkreises 6 mit mehreren Zwischenkreiskondensatoren $C_{ZK}$ würde das zusätzliche unidirektionale Schaltelement DT1, DT2 aber den Erdfehlerstromkreis unterbrechen, wenn die Summe der Spannungen aus der Spannung der DC-Komponente 4 und des AC-Netzes 5 größer der Zwischenkreisspannung $V_{ZK}$ wird oder wenn DC-Spannung $V_{DC}$ an einem Zwischenkreiskondensator $C_{ZK}$ eines Gleichspannungszwischenkreises 6 mit mehreren Zwischenkreiskondensatoren $C_{ZK}$ anliegt. Damit kann ein Zwischenkreiskondensator $C_{ZK}$ des Gleichspannungszwischenkreises 6 nicht überladen werden.

In einem bidirektionalen Betrieb des Umrichters 1 würde das zusätzliche unidirektionale Schaltelement DT1, DT2 aber den normalen Betrieb stören, da die Energieflussrichtung von der DC-Seite auf die AC-Seite verhindert wäre. Um auch einen bidirektionalen Umrichter 1 wirkungsvoll gegen die oben beschriebenen Erdschlussfehlerbilder zu schützen, kann parallel zum zusätzlichen unidirektionalen Schaltelement DT1, DT2 ein zusätzlicher unidirektional leitender Halbleiterschalter T1, T2 geschaltet sein, wie in Fig.2 angedeutet und in Fig.3 dargestellt.

Der weitere unidirektional leitende Halbleiterschalter T1, T2 unterbricht die jeweilige Verbindungsleitung V+, V- in der er angeordnet ist bei offenem weiteren Halbleiterschalter T1, T2 und schaltet die jeweilige Verbindungleitung V+, V- bei geschlossenem weiteren Halbleiterschalter T1, T2 in einer vorgesehenen Stromflussrichtung leitend durch. In einer der leitenden Stromflussrichtung entgegengensetzten Stromflussrichtung ist der weitere unidirektional leitende Halbleiterschalter T1, T2 jedoch nicht leitend. Der weitere unidirektional leitende Halbleiterschalter T1, T2 ist damit in Serie in die jeweilige Verbindungleitung V+, V- geschaltet.

Die leitende Stromflussrichtung des unidirektional leitenden Halbleiterschalters T1, T2 ist entgegengesetzt zur leitenden Stromflussrichtung des zugehörigen unidirektionalen Schaltelements DT1, DT2.

Im Idealfall sperrt der weitere unidirektional leitende Halbleiterschalter T1, T2 im geschlossenen Zustand in der der leitenden Stromflussrichtung entgegengensetzten Stromflussrichtung. Ein Beispiel hierfür ist ein sperrfähiger Transistor, der in der der leitenden Stromflussrichtung entgegengensetzten Stromflussrichtung sperrt. Es kann aber auch sein, dass der weitere unidirektional leitende Halbleiterschalter T1, T2 in der der leitenden Stromflussrichtung entgegengensetzten Stromflussrichtung gar nicht betrieben werden darf, weil er durch eine solche Spannung oder einen solchen Strom beschädigt oder zerstört werden kann. Auch in diesem Fall ist der Halbleiterschalter T1, T2 im Sinne der Erfindung nur unidirektional leitend.

Als unidirektional leitender Halbleiterschalter T1, T2 wird vorzugsweise ein Transistor (MOSFET oder IGBT) eingesetzt. Ein auf leitend geschalteter (geschlossener) Transistor kann einen vorgegebenen maximalen Nennstrom in einer bestimmten Stromflussrichtung, der sogenannten Vorwärtsrichtung, leiten und es kann bei gesperrtem (offenem) Transistor eine vorgegebene maximale Nennspannung in dieser Vorwärtsrichtung angelegt und mittels des Transistors unterbrochen werden. In der entgegengesetzten Stromflussrichtung (Rückwärtsrichtung) kann ein Transistor je nach Typ zwar eine bestimmte Rückwärtsspannung (IBGT) oder einen gewissen Rückwärtsstrom (MOSFET) ertragen, nur ist diese ertragbare Rückwärtsspannung bzw. Rückwärtsstrom deutlich kleiner als die gewünschte oder benötigte Nennspannung bzw. der Nennstrom. Wird die Rückwärtsspannung oder der Rückwärtsstrom bei geschlossenem Transistor zu groß, führt das zur Zerstörung des Transistors. Ein Transistor ist damit nur in einer Stromflussrichtung zum Schalten eines vorgesehenen elektrischen Stromes bzw. einer vorgesehenen Spannung einsetzbar, in die entgegengesetzte Stromflussrichtung hingegen nicht, weil das den Transistor zerstören würde. Ein IGBT- oder MOSFET-Transistor ist damit ein Beispiel eines unidirektional leitenden Halbleiterschalters im Sinne der Erfindung.

In der Ausführung des Umrichters 1 gemäß Fig.3 ist auf der DC-Seite zwischen dem DC-Anschluss 3 und dem Gleichspannungzwischenkreis 6 als Schal-tungskomponente 17 auch ein DC/DC-Wandler 12 vorgesehen, um die DC-Spannung $V_{DC}$ am DC-Anschluss 3 auf die Zwischenkreisspannung $V_{ZK}$ zu wandeln (üblicherweise hochzusetzen), oder umgekehrt die Zwischenkreisspannung $V_{ZK}$ auf die benötigte DC-Spannung $V_{DC}$ am DC-Anschluss 3 zu wandeln (üblicherweise tiefzusetzen). Der DC/DC-Wandler 12 ist daher oftmals als kombinierter Hoch-/Tiefsetzsteller ("Buck-Boost-Converter") ausgeführt, wie im Ausführungsbeispiel der Fig. 3. Ein DC/DC-Wandler 12 weist in der Regel ein DC-Leistungsteil 13 mit Halbleiterschaltern S5, S6, beispielsweise in Form von Halbbrücken, auf. Die Halbleiterschalter S5, S6 des DC-Leistungsteils 13 werden auch durch Steuersignale SS5, SS6 von der Steuereinheit 11 angesteuert und zur Spannungswandlung kontrolliert mit einer vorgegebenen Schaltfrequenz (typischerweise in der Größenordnung von 1kHz bis 100kHz) geöffnet und geschlossen. Zusätzlich ist im DC/DC-Wandler 12 auch eine Induktivität $L_E$ vorgesehen. Solche optionale DC/DC-Wandler 12 sind hinlänglich bekannt, weshalb nicht weiter darauf eingegangen werden muss.

Der zusätzliche unidirektional leitende Halbleiterschalter T1, T2 zum Schutz des Gleichspannungszwischenkreises 6 im Falle eines Erdschlussfehlers 10 ist im normalen Betrieb geschlossen, um das parallel dazu geschaltete unidirektionale Schaltelement DT1, DT2 in seiner leitenden Stromflussrichtung zu überbrücken und das in dieser Stromflussrichtung sperrende unidirektionale Schaltelement DT1, DT2 wirkungslos zu machen. Das ermöglicht den ungestörten bidirektionalen Betrieb des Umrichters 1.

Im Betrieb des Umrichters 1 kann die Zwischenkreisspannung $V_{ZK}$ oder die Spannung an einem Zwischenkreiskondensator $C_{ZK}$ überwacht werden, beispielsweise von der Steuereinheit 11. Der zusätzliche unidirektional leitende Halbleiterschalter T1, T2 zum Schutz des Gleichspannungszwischenkreises 6 wird permanent geöffnet, wenn die Zwischenkreisspannung $V_{ZK}$ oder die Spannung an einem Zwischenkreiskondensator $C_{ZK}$ einen vorgegebenen Grenzwert überschreitet. Die Zwischenkreisspannung $V_{ZK}$ oder die Spannung an einem Zwischenkreiskondensator $C_{ZK}$ kann hierfür mit einem Spannungssensor 16 gemessen werden und der Messwert kann der Steuereinheit 11 zur Auswertung zur Verfügung gestellt werden. Im obigen Beispiel mit einer ausgelegten Spannungsfestigkeit von 1000V, könnte der Grenzwert für die Zwischenkreisspannung $V_{ZK}$ beispielsweise auf 950V und der Grenzwert für die Spannung an einem Zwischenkreiskondensator $C_{ZK}$ beispielsweise auf 475V gesetzt sein. Durch das permanente Öffnen des zusätzlichen Halbleiterschalters T1, T2 wird das parallel dazu geschaltete unidirektionale Schaltelement DT1, DT2 aktiv und sperrt den Stromfluss, der als Folge eines Erdschlussfehlers 10 zum Aufladen des Gleichspannungszwischenkreises 6 führen würde. Der Zwischenkreiskondensator $C_{ZK}$ kann damit im Falle eines ober erläuterten Erdschlussfehlers 10 nicht über den Grenzwert hinaus geladen werden.

Der zusätzliche unidirektional leitende Halbleiterschalter T1, T2 zum Schutz des Gleichspannungszwischenkreises 6 kann aber auch dann permanent geöffnet werden, wenn ein Erdschlussfehler 10 erkannt wird. Das kann auch unabhängig von der Überwachung der Zwischenkreisspannung $V_{ZK}$ oder der Spannung an einem Zwischenkreiskondensator $C_{ZK}$ sein.

"Permanent" bedeutet in diesem Zusammenhang, dass der weitere unidirektional leitende Halbleiterschalter T1, T2 zumindest solange geöffnet bleibt, solange im Falle eines Erdschlussfehlers 10 ein Erdfehlerstromkreis mit fließendem Fehlerstrom $i_F$ vorliegt. Der Erdfehlerstromkreis kann im Umrichter 1 durch verschiedene Maßnahmen unterbrochen werden. Beispielsweise können im Umrichter 1 Maßnahmen vorgesehen sein, um einen Erdschlussfehler 10 zu erkennen und um einen Erdfehlerstromkreis zu unterbrechen. Der Erdfehlerstromkreis kann beispielsweise durch das Öffnen eines AC-seitigen Trennelements 14 und/oder eines DC-seitigen Trennelements erfolgen. Auch eine DC-Sicherung kann den Erdfehlerstromkreis unterbrechen. Ebenso kann ein Sicherungselement auf Seiten des AC-Netzes 5 für eine Trennung des AC-Netzes sorgen. Diese Maßnahmen sind aber in der Regel zu langsam, um vor den schädlichen Auswirkungen eines oben erläuterten Erdschlussfehlers, mit sehr hohen Stromanstiegsgeschwindigkeiten wirksam zu schützen.

"Permanent" ist damit zeitlich zumindest deutlich länger als die üblichen Schaltzeiten (1kHz bis 100kHz Schaltfrequenz) der Halbleiterschalter S1, ..., S4, S5, S6 eines AC-Leistungsteils 7 oder DC-Leistungsteils 12. Das wird in der Regel auch länger sein, als eine halbe Periode oder eine ganze Periode einer AC-Spannung $v_{AC}$ des AC-Netzes 5, in der Regel ein Vielfaches davon. Der weitere Halbleiterschalter T1, T2 kann auch mindestens so lange geöffnet bleiben, solange ein Trennelement 14 zum Öffnen benötigt. Ein offenes Trennelement 14 würde natürlich den Erdfehlerstromkreis unterbrechen. In einer vorteilhaften Ausführung bedeutet "permanent" damit mindestens so lange wie ein AC-seitiges Trennelement 14 zum Öffnen benötigt.

Nach oben hin kann "permanent" bedeuten, dass der zumindest eine weitere Halbleiterschalter T1, T2 von der Steuereinheit 11 bis zur Klärung des Erdschlussfehlers geöffnet wird. Die Klärung des Erdschlussfehlers kann beispielsweise durch Wartungspersonal erfolgen.

Es kann auch vorgesehen sein, dass der weitere unidirektional leitende Halbleiterschalter T1, T2 zuerst für eine hinreichend lange Zeitdauer geöffnet bleibt und dass dann der weitere unidirektional leitende Halbleiterschalter T1, T2 wieder geschlossen wird. Besteht der Erdschlussfehler 10 dann immer noch, würde der weitere unidirektional leitende Halbleiterschalter T1, T2 erneut geöffnet werden. Das kann für eine vorgegebenen Anzahl, beispielsweise dreimal, wiederholt werden. Besteht dann der Erdschlussfehler 10 immer noch, kann der Umrichter 1 in einen Fehlermodus übergehen, der eine Klärung des Erdschlussfehlers 10, beispielsweise durch Wartungspersonal, erfordert. Bis zur Klärung kann der Umrichter 1 nicht mehr in Betrieb genommen werden. Dasselbe lässt sich auch mit mehreren Zyklen des Öffnens eines Trennelementes 14 realisieren.

Das unidirektionale Schaltelement DT1, DT2, optional mit parallelem zusätzlichem unidirektional leitenden Halbleiterschalter T1, T2, zum Schutz des Gleichspannungszwischenkreises 6 kann als separater, zusätzlicher Bauteil im Umrichter 1 vorgesehen sein. Ein solcher zusätzlicher unidirektional leitender Halbleiterschalter T1, T2 könnte auf minimale Leitverluste optimiert sein, um den Wirkungsgrad des Umrichters 1 möglichst wenig zu beeinflussen.

Es ist aber auch möglich, dass ein bereits bestehender Bauteil eine optional im Umrichter 1 vorhandene Schaltungskomponente 17, beispielsweise ein DC-Leistungsteil eines DC/DC-Wandlers 12, als zusätzliches unidirektionales Schaltelement DT1, DT2 mit zusätzlichem parallelem unidirektional leitenden Halbleiterschalter T1, T2 zum Schutz des Gleichspannungszwischenkreises 6 verwendet wird. Es gibt beispielsweise DC/DC-Wandler 12 in der Form von Hoch-/Tiefsetzsteller - Tief-/Hochsetzsteller ("Buck/Boost-Boost/Buck-Converter"), in denen ein benötigter unidirektional leitender Halbleiterschalter T1, T2 mit parallelem unidirektionalen Schaltelement DT1, DT2 als Teil des DC/DC-Wandlers 12 bereits vorhanden ist. Im normalen Betrieb würde der zusätzliche Halbleiterschalter T1, T2 somit als Schaltungsbauteil des DC/DC-Wandlers 12 mit der vorgesehenen Schaltfrequenz des DC/DC-Wandlers 12 geschaltet werden. Im Fehlerfall kann der zusätzliche Halbleiterschalter T1, T2 aber permanent geöffnet werden. Ein Halbleiterschalter des DC/DC-Wandlers 12 hätte damit eine Doppelfunktion, nämlich die im DC/DC-Wandler vorgesehene und im Erdfehlerfall eine Schutzfunktion, da der DC/DC-Wandler 12 im Fehlerfall ohnehin nicht benötigt wird.

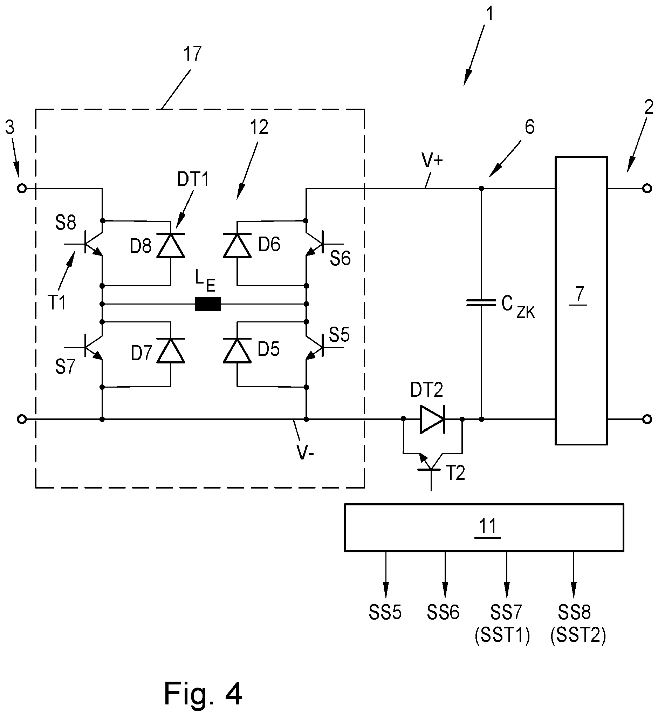

Einen solchen Hoch-/Tiefsetzsteller - Tief-/Hochsetzsteller DC/DC-Wandler 12 als Schaltungskomponenten 17 zeigt beispielsweise Fig.4. Der DC/DC-Wandler 12 umfasst vier Transistoren als Halbleiterschalter S5, S6, S7, S8, jeweils mit paralleler Freilaufdiode D5, D6, D7, D8. Es ist ersichtlich, dass die Freilaufdiode D8 als zusätzliches unidirektionales Schaltelement DT1 in der positiven Verbindungsleitung V+ verwendet werden kann. Der parallele unidirektional leitende Hableiterschalter S8 wäre dann der zusätzliche parallele unidirektional leitende Halbleiterschalte T1 zum Schutz des Gleichspannungszwischenkreises 6, der im Erdfehlerfall permanent geöffnet wird. Dieses permanente Öffnen des Halbleiterschalter S8 (T1) ist nicht zu vergleichen mit dem üblichen Öffnen mit der Schaltfrequenz des DC/DC-Wandlers 12, weil das permanente Öffnen eine wesentlich längere durchgehende Zeitdauer dauert. Zusätzlich kann in der negativen Verbindungsleitung V- ein unidirektionales Schaltelement DT1 mit parallelem Hableiterschalter T2 vorgesehen sein, wenn hierfür die Komponenten der Schaltungskomponente 17, wie des DC/DC-Wandlers 12, nicht verwendbar sind oder verwendet werden sollen.

Um einen Erdschlussfehler 10 im Umrichter 1 zu erkennen, kann ein im Umrichter 1 fließender elektrischer Strom und/oder eine elektrische Spannung an einer Komponente des Umrichters 1 erfasst werden. Das kann ein fließender DC-Strom in einer DC-Strom führenden Leitung oder ein DC-Strom in einem DC-Strom führenden Bauteil des Umrichters 1 sein oder ein fließender AC-Strom in einer AC-Strom führenden Leitung oder in einem AC-Strom führenden Bauteil des Umrichters 1. Das umfasst insbesondere auch einen elektrischen Strom der aus dem Umrichter 1 oder in den Umrichter 1 fließt. Ebenso soll damit eine elektrische Spannung umfasst sein, die am DC-Anschluss 3 oder am AC-Anschluss 2 anliegt. Das umfasst auch eine Spannungsmessung gegen Erde, beispielsweise zwischen einer der Verbindungsleitungen V+, V- und Erde, wofür der Umrichter 1 beispielsweise geerdet ist. Hierfür kann zumindest ein Stromsensor 15 (wie in Fig.1) und/oder zumindest ein Spannungssensor 16 (wie in Fig.1) vorgesehen sein. Anhand des erfassten fließenden Stromes (AC und/oder DC) und/oder der erfassten Spannung (AC und/oder DC) kann ein Erdschlussfehler erkannt werden. Es wird natürlich ein solcher Strom und/oder eine solche Spannung erfasst, der einen zuverlässigen Rückschluss auf einen Erdschlussfehler erlaubt. Ein Stromsensor 15 und/oder ein Spannungssensor 16 kann mit der Steuereinheit 11 verbunden sein, die den erfassten elektrischen Strom und/oder die erfasste elektrische Spannung zum Erkennen eines Erdschlussfehlers auswertet. Wird anhand des erfassten elektrischen Stromes und/oder der erfassten elektrischen Spannung ein Erdschlussfehler erkannt, wird ein vorhandener weiterer Halbleiterschalter T1, T2 von der Steuereinheit 11 durch ein entsprechendes Steuersignal SST1, SST2 permanent geöffnet.

Die Auswertung des erfassten elektrischen Stromes oder einer erfassten elektrischen Spannung in der Steuereinheit 11 kann so erfolgen, dass der Wert des erfassten Stromes oder der erfassten elektrischen Spannung mit einem Sollwert des Stromes oder der Spannung, der der Steuereinheit 11 zum Steuern des Umrichters 1 vorgegeben ist, vergleicht. Weicht der erfasste Strom oder die erfasst Spannung zu weit vom Sollwert ab, kann ein Erdschlussfehler 10 vermutet werden. Hierfür kann beispielsweise ein zulässiger Strombereich oder Spannungsbereich vorgegeben sein, um den der erfasste Strom oder die erfasste Spannung vom Sollwert maximal abweichen darf. Ein Überstrom oder eine Überspannung innerhalb des Umrichters 1 ohne Vorhandensein eines Erdschlussfehlers 10 könnte von dieser Auswertungsmethode jedoch möglicherweise nicht unterschieden werden.

Für eine sicherere Erkennung eines Erdschlussfehlers 10, können daher auch mehrere Strommessungen und/oder Spannungsmessungen korreliert werden, um festzustellen, ob ein Erdschlussfehler vorliegt, also insbesondere kein interner Kurzschluss, sondern ein Kurzschluss, der die Erdleitung PE miteinbezieht, sodass ein Erdfehlerstrom $i_F$ über die Erdleitung PE fließt. Hierzu können natürlich auch mehrere Stromsensoren 15 und/oder Spannungssensoren 16 vorgesehen sein.

In einer Ausführung wie in Fig.1 wäre dies beispielsweise ein Vergleich der Strommessungen des am positiven DC-Anschlusspol DC+ und am negativen DC-Anschlusspol DC- fließenden Stromes. Sobald beide Messungen unterschiedliche Beträge aufweisen, kann auf einen Erdfehlerstrom $i_F$, also auf einen Erdfehler, geschlossen werden. Üblich ist es außerdem innerhalb des Umrichters 1, beispielsweise am AC-Anschluss 2, einen spezialisierten Differenzstromsensor (sogenannter RCMU: Residual Current Monitoring Unit) anzubringen, der alle AC-Phasen einschließt. Im Normalfall ist die Summe der Ströme der AC-Phasen Null. Im Erdfehlerfall fließt ein Strom über Erde PE an der RCMU vorbei. Die RCMU misst diesen Differenzstrom und meldet diesen an die Steuereinheit 11, die auf einen Erdschlussfehler 10 schließen kann.

Oftmals werden Treiberbausteine für die Halbleiterschalter S1, ..., Sn eines AC-Leistungsteils 7 oder DC-Leistungsteils 12 mit integrierter Sättigungsstromüberwachung verwendet. Die Sättigungsstromüberwachung überwacht beispielsweise im eingeschalteten Zustand des Halbleiterschalters die Spannung zwischen einem Kollektor und Emitter eines Transistors als Halbleiterschalter, weil diese Spannung ein Maß für den Sättigungsstrom ist. Ist diese Spannung zu hoch kann auf einen zu hohen Stromfluss und damit auf einen Erdschlussfehler geschlossen werden. Der Treiberbaustein hat auch eine Signalleitung, mit das an eine andere Einheit, wie die Steuereinheit 11, signalisiert werden kann. Eine solche Sättigungsstromüberwachung eines Treiberbausteins kann daher auch als Stromsensor 15 verwendet werden und hätte den Vorteil, dass diese sehr schnell ist.

Diese Messung durch einen Stromsensor 15 und/oder einen Spannungssensor 16 und die Auswertung eines gemessenen elektrischen Stromes und/oder einer gemessenen elektrischen Spannung kann in der Steuereinheit 11 sehr schnell erfolgen. Die Steuereinheit 11 arbeitet üblicherweise in Zeitschritten in der Größenordnung von 10 Mikrosekunden bis 100 Mikrosekunden. Damit kann auch ein Erdfehler sehr schnell erkannt werden.

Damit ist es aber insbesondere möglich, dass die Steuereinheit 11 den zumindest einen weiteren unidirektional leitenden Halbleiterschalter T1, T2 innerhalb einer kurzen Zeitspanne, typischerweise in der Größenordnung von 10 Mikrosekunden bis 100 Mikrosekunden, permanent öffnet.

In einem 50 Hz AC-Netz 5 dauert eine Halbwelle der AC-Spannung $v_{AC}$ 10 Millisekunden, also in etwa um einen Faktor Hundert bis Tausend länger, als die Erkennung eines Erdfehlers und das Öffnen des zumindest einen weiteren Halbleiterschalters T1, T2 dauert. Damit können die Auswirkungen eines Erdschlussfehler 10 wirkungsvoll unterdrückt werden und der trafolose Umrichter 1 kann wirkungsvoll vor den Auswirkungen von Erdschlussfehlern geschützt werden.

Grundsätzlich wäre es auch möglich den weiteren unidirektional leitenden Halbleiterschalter T1, T2 mit parallelem unidirektionalem Schaltelement DT1, DT2 auch an anderen Stellen des Erdfehlerstromkreises anzuordnen, um den Erdfehlerstromkreis im Falle eines Erdschlussfehler 10 zu unterbrechen. Beispielsweise könnte der weitere Halbleiterschalter T1, T2 im Gleichspannungszwischenkreis 6 oder auch in einer Leitung zwischen dem Mittelpunkt M eines Gleichspannungszwischenkreises 6 und dem Neutralpunkt N des Umrichters 1 angeordnet sein. Auch an dieser Stelle könnte der weitere unidirektional leitende Halbleiterschalter T1, T2 mit parallelem unidirektionalem Schaltelement DT1, DT2 einen beschriebenen Erdfehlerstromkreis über den Gleichspannungszwischenkreis 6 unterbrechen. Obwohl das grundsätzlich möglich wäre, hätte das aber auch Nachteile. An diesen Stellen ändert sich die Polarität der Spannung ständig, weshalb der weitere unidirektional leitende Halbleiterschalter T1, T2 mit parallelem unidirektionalem Schaltelement DT1, DT2 zwingend in Abhängigkeit von der Polarität der Spannung geschaltet werden müsste, um den normalen Betrieb des Umrichters 1 nicht zu stören, was zusätzlichen Aufwand verursachen würde.

Zusätzlich zum permanenten Öffnen eines weiteren unidirektional leitenden Halbleiterschalters T1, T2 kann im Falle eines Erdschlussfehlers 10 natürlich am Umrichter 1 auch noch eine andere Maßnahme gesetzt werden, die auch viel langsamer ausgeführt werden könnte. Beispielsweise könnte ein Trennelement 14 (auf der AC oder der DC-Seite) des Umrichters 1 geöffnet werden. Gleichsam könnten auch die Halbleiterschalter S1, ..., Sn des AC-Leistungsteils 8 und/oder einer Schaltungskomponente 17 auf der DC-Seite geöffnet werden, beispielsweise um den Umrichter 1 in einen definierten Zustand zu bringen.

Jedes beschriebene Halbleiterschaltelement S1, ..., S8, T1, T2 ist vorzugsweise als Transistor ausgeführt, beispielsweise als IGBT- oder MOSFET-Transistor.

Die Steuereinheit 11 ist vorzugsweise eine mikroprozessorbasierte Hardware, auf der entsprechende Steuersoftware installiert ist und ausgeführt wird. Die Steuereinheit 11 kann auch als integrierte Schaltung ausgeführt sein, wie beispielsweise als anwendungsspezifische integrierte Schaltung (ASIC) oder Field Programmable Gate Array (FPGA).

## Patentansprüche

1. Trafoloser Umrichter mit einem DC-Anschluss (3) und einem AC-Anschluss (2), wobei der AC-Anschluss (2) mit einem AC-Leistungsteil (7) des Umrichters (1) verbunden ist, indem der AC-Leistungsteil (7) zumindest einen Schaltzweig (8) mit zumindest zwei in Serie geschalteten Halbleiterschaltern (S1, S2, S3, S4) mit jeweils paralleler Freilaufdiode (D1, D2, D3, D4) aufweist, zwischen denen ein elektrischer Pol (P) gebildet ist, der mit dem AC-Anschluss (2) verbunden ist, wobei im Umrichter (1) ein Gleichspannungszwischenkreis (6) mit zumindest einem Zwischenkreiskondensator ($C_{ZK}$) vorgesehen ist und der Gleichspannungszwischenkreis (6) mit dem AC-Leistungsteil (7) und dem DC-Anschluss (3) verbunden ist, **dadurch gekennzeichnet, dass** in einer ersten positiven Verbindungsleitung (V+) des Umrichters (1), die einen ersten positiven Zwischenkreisanschlusspol (ZK+) des Gleichspannungszwischenkreises (6) mit einem positiven DC-Anschlusspol (DC+) des DC-Anschlusses (3) verbindet, ein unidirektionales Schaltelement (DT1) geschaltet ist, das einen elektrischen Stromfluss in einer ersten Stromflussrichtung vom AC-Anschluss (2) zum DC-Anschluss (3) leitet und entgegen der ersten Stromflussrichtung sperrt, **und/oder** in einer zweiten negativen Verbindungsleitung (V-) des Umrichters (1), die einen zweiten negativen Zwischenkreisanschlusspol (ZK-) des Gleichspannungszwischenkreises (6) mit einem negativen DC-Anschlusspol (DC-) des DC-Anschlusses (3) verbindet, ein unidirektionales Schaltelement (DT2) geschaltet ist, das einen elektrischen Stromfluss in einer zweiten Stromflussrichtung vom DC-Anschluss (3) zum AC-Anschluss (2) leitet und entgegen der zweiten Stromflussrichtung sperrt.

2. Trafoloser Umrichter nach Anspruch 1, **dadurch gekennzeichnet, dass** parallel zum unidirektionalen Schaltelement (DT1) in der positiven Verbindungsleitung (V+) ein unidirektional leitender Halbleiterschalter (T1) vorgesehen ist, der die positive Verbindungleitung (V+) bei offenem unidirektional leitenden Halbleiterschalter (T1) unterbricht und bei geschlossenem unidirektional leitenden Halbleiterschalter (T1) in der ersten Stromflussrichtung sperrt und entgegen der ersten Stromflussrichtung leitend durchschaltet und/oder parallel zum unidirektionalen Schaltelement (DT2) in der negativen Verbindungsleitung (V-) ein unidirektional leitender Halbleiterschalter (T2) vorgesehen ist, der die negative Verbindungleitung (V-) bei offenem unidirektional leitenden Halbleiterschalter (T2) unterbricht und bei geschlossenem unidirektional leitenden Halbleiterschalter (T2) in der zweiten Stromflussrichtung sperrt und entgegen der zweiten Stromflussrichtung leitend durchschaltet, **dass** im Umrichter (1) ein Spannungssensor (16) vorgesehen, der eine Zwischenkreisspannung ($V_{ZK}$) des Gleichspannungszwischenkreises (6) oder eine Spannung an einem Zwischenkreiskondensator ($C_{ZK}$) des Gleichspannungszwischenkreises (6) erfasst **und dass** eine Steuereinheit (11) vorgesehen ist, die eingerichtet ist, den zusätzlichen unidirektional leitenden Halbleiterschalter (T1) in der positiven Verbindungsleitung (V+) und/oder den zusätzlichen unidirektional leitenden Halbleiterschalter (T2) in der negativen Verbindungsleitung (V-) permanent zu öffnen, wenn die erfasste Zwischenkreisspannung ($V_{ZK}$) oder die erfasste Spannung an einem Zwischenkreiskondensator ($C_{ZK}$) des Gleichspannungszwischenkreises (6) einen vorgegebenen Grenzwert erreicht.

3.  Trafoloser Umrichter nach Anspruch 2, **dadurch gekennzeichnet, dass** im Umrichter (1) ein Stromsensor (15) vorgesehen ist, der einen im Umrichter (1) fließenden elektrischen Strom erfasst und/oder ein Spannungssensor (16) vorgesehen ist, der einen an einer Komponente des Umrichters (1) anliegende elektrischen Spannung erfasst, **dass** die Steuereinheit (11) eingerichtet ist, anhand des erfassten elektrischen Stromes und/oder der erfassten elektrischen Spannung einen Erdschlussfehler (10) zu erkennen **und dass** die Steuereinheit (11) eingerichtet ist, den zusätzlichen unidirektional leitenden Halbleiterschalter (T1) in der positiven Verbindungsleitung (V+) und/oder den zusätzlichen unidirektional leitenden Halbleiterschalter (T2) in der negativen Verbindungsleitung (V-) im Falle eines erkannten Erdschlussfehlers (10) permanent zu öffnen, wenn die erfasste Zwischenkreisspannung ($V_{ZK}$) oder die erfasste Spannung an einem Zwischenkreiskondensator ($C_{ZK}$) des Gleichspannungszwischenkreise (6) s einen vorgegebenen Grenzwert erreicht.

4.  Trafoloser Umrichter nach Anspruch 1, **dadurch gekennzeichnet, dass** parallel zum unidirektionalen Schaltelement (DT1) in der positiven Verbindungsleitung (V+) ein unidirektional leitender Halbleiterschalter (T1) vorgesehen ist, der die positive Verbindungleitung (V+) bei offenem unidirektional leitenden Halbleiterschalter (T1) unterbricht und bei geschlossenem unidirektional leitenden Halbleiterschalter (T1) in der ersten Stromflussrichtung sperrt und entgegen der ersten Stromflussrichtung leitend durchschaltet und/oder parallel zum unidirektionalen Schaltelement (DT2) in der negativen Verbindungsleitung (V-) ein unidirektional leitender Halbleiterschalter (T2) vorgesehen ist, der die negative Verbindungleitung (V-) bei offenem unidirektional leitenden Halbleiterschalter (T2) unterbricht und bei geschlossenem unidirektional leitenden Halbleiterschalter (T2) in der zweiten Stromflussrichtung sperrt und entgegen der zweiten Stromflussrichtung leitend durchschaltet, **dass** im Umrichter (1) ein Stromsensor (15) vorgesehen ist, der einen im Umrichter (1) fließenden elektrischen Strom erfasst und/oder ein Spannungssensor (16) vorgesehen ist, der einen an einer Komponente des Umrichters (1) anliegende elektrischen Spannung erfasst, **dass** die Steuereinheit (11) eingerichtet ist, anhand des erfassten elektrischen Stromes und/oder der erfassten elektrischen Spannung einen Erdschlussfehler (10) zu erkennen **und dass** die Steuereinheit (11) eingerichtet ist, den zusätzlichen unidirektional leitenden Halbleiterschalter (T1) in der positiven Verbindungsleitung (V+) und/oder den zusätzlichen unidirektional leitenden Halbleiterschalter (T2) in der negativen Verbindungsleitung (V-) im Falle eines erkannten Erdschlussfehlers (10) permanent zu öffnen.

5.  Trafoloser Umrichter nach Anspruch 2, 3 oder 4, **dadurch gekennzeichnet, dass** in der positiven Verbindungsleitung (V+) und/oder in der negativen Verbindungsleitung (V-) eine Schaltungskomponente (17), vorzugsweise ein DC/DC-Wandler (12), geschaltet ist, wobei die Schaltungskomponente (17), vorzugsweise der DC/DC-Wandler (12), zumindest einen Halbleiterschalter (S5, S6, S7, S8) mit einer parallel dazu geschalteten Freilaufdiode (D5, D6, D7, D8) umfasst, der als unidirektional leitender Halbleiterschalter (T1, T2) mit parallel geschaltetem unidirektionalen Schaltelement (DT1, DT2) verwendbar ist, **und dass** die Steuereinheit (11) den zumindest einen Halbleiterschalter (S5, S6) der Schaltungskomponente (17), vorzugsweise des DC/DC-Wandlers (12), im Falle eines erkannten Erdschlussfehlers (10) permanent öffnet.

6.  Trafoloser Umrichter nach einem der Ansprüche 2 bis 5, **dadurch gekennzeichnet, dass** der zusätzliche unidirektional leitende Halbleiterschalter (T1) in der positiven Verbindungsleitung (V+) und/oder der zusätzliche unidirektional leitende Halbleiterschalter (T2) in der negativen Verbindungsleitung (V-) ein Transistor ist.

7.  Verfahren zum Schützen eines trafolosen Umrichters (1) vor den Auswirkungen eines Erdschlussfehlers (10), wobei der Umrichter (1) einen DC-Anschluss (3) und einen AC-Anschluss (2) aufweist und der AC-Anschluss (2) mit einem AC-Leistungsteil (7) des Umrichters (1) verbunden wird, indem der AC-Leistungsteil (7) zumindest einen Schaltzweig (8) mit zumindest zwei in Serie geschalteten Halbleiterschaltern (S1, S2, S3, S4) mit jeweils paralleler Freilaufdiode (D1, D2, D3, D4) aufweist, zwischen denen ein elektrischer Pol (P) gebildet ist, der mit dem AC-Anschluss (2) verbunden wird, wobei der Umrichter (1) ferner einen Gleichspannungszwischenkreis (6) mit zumindest einem Zwischenkreiskondensator ($C_{ZK}$) umfasst und der Gleichspannungszwischenkreis (6) mit dem AC-Leistungsteil (7) und dem DC-Anschluss (3) verbunden wird, **dadurch gekennzeichnet, dass** der Umrichter (1) ein in einer positiven Verbindungsleitung (V+) des Umrichters (1), die einen positiven Zwischenkreisanschlusspol (ZK+) des Gleichspannungszwischenkreises (6) mit einem positiven DC-Anschlusspol (DC+) des DC-Anschlusses (3) verbindet, angeordnetes unidirektionales Schaltelement (DT1) umfasst, das einen elektrischen Stromfluss in einer ersten Stromflussrichtung vom AC-Anschluss (2) zum DC-Anschluss (3) leitet und entgegen der ersten Stromflussrichtung sperrt, **und/oder** der Umrichter (1) ein in der negativen Verbindungsleitung (V-) des Umrichters (1), die einen negativen Zwischenkreisanschlusspol (ZK-) des Gleichspannungszwischenkreises (6) mit einem negativen DC-Anschlusspol (DC-) des DC-Anschlusses (3) verbindet, angeordnetes unidirektionales Schaltelement (DT2) umfasst, das einen elektrischen Stromfluss in einer zweiten Stromflussrichtung vom DC-Anschluss (3) zum AC-Anschluss (2) leitet und entgegen der zweiten Stromflussrichtung sperrt.

8. Verfahren nach Anspruch 7, **dadurch gekennzeichnet, dass** parallel zum unidirektionalen Schaltelement (DT1) in der positiven Verbindungsleitung (V+) ein weiterer unidirektional leitender Halbleiterschalter (T1) angeordnet wird, der die positive Verbindungleitung (V+) bei offenem unidirektional leitenden Halbleiterschalter (T1) unterbricht und bei geschlossenem unidirektional leitenden Halbleiterschalter (T1) in der ersten Stromflussrichtung sperrt und entgegen der ersten Stromflussrichtung leitend durchschaltet und/oder parallel zum unidirektionalen Schaltelement (DT2) in der negativen Verbindungsleitung (V-) ein weiterer unidirektional leitender Halbleiterschalter (T2) angeordnet wird, der die negative Verbindungleitung (V-) bei offenem unidirektional leitenden Halbleiterschalter (T2) unterbricht und bei geschlossenem unidirektional leitenden Halbleiterschalter (T2) in der zweiten Stromflussrichtung sperrt und entgegen der zweiten Stromflussrichtung leitend durchschaltet, **und dass** der weitere unidirektional leitende Halbleiterschalter (T1) in der positiven Verbindungsleitung (V+) und/oder der weitere unidirektional leitende Halbleiterschalter (T2) in der negativen Verbindungsleitung (V-) permanent geöffnet wird, wenn eine Zwischenkreisspannung ($V_{ZK}$) des Gleichspannungszwischenkreises (6) oder eine Spannung an einem Zwischenkreiskondensator ($C_{ZK}$) des Gleichspannungszwischenkreises (6) einen vorgegebenen Grenzwert erreicht.

9. Verfahren nach Anspruch 7, **dadurch gekennzeichnet, dass** parallel zum unidirektionalen Schaltelement (DT1) in der positiven Verbindungsleitung (V+) ein weiterer unidirektional leitender Halbleiterschalter (T1) angeordnet wird, der die positive Verbindungleitung (V+) bei offenem unidirektional leitenden Halbleiterschalter (T1) unterbricht und bei geschlossenem unidirektional leitenden Halbleiterschalter (T1) in der ersten Stromflussrichtung sperrt und entgegen der ersten Stromflussrichtung leitend durchschaltet und/oder parallel zum unidirektionalen Schaltelement (DT2) in der negativen Verbindungsleitung (V-) ein weiterer unidirektional leitender Halbleiterschalter (T2) angeordnet wird, der die negative Verbindungleitung (V-) bei offenem unidirektional leitenden Halbleiterschalter (T2) unterbricht und bei geschlossenem unidirektional leitenden Halbleiterschalter (T2) in der zweiten Stromflussrichtung sperrt und entgegen der zweiten Stromflussrichtung leitend durchschaltet, **dass** ein im Umrichter (1) fließender elektrischer Strom und/oder eine an einer Komponenten des Umrichters (1) anliegende elektrische Spannung erfasst wird und anhand des erfassten elektrischen Stromes und/oder der erfassten elektrischen Spannung ein Erdschlussfehler (10) erkannt wird, **und dass** der weitere unidirektional leitende Halbleiterschalter (T1) in der positiven Verbindungsleitung (V+) und/oder der weitere unidirektional leitende Halbleiterschalter (T2) in der negativen Verbindungsleitung (V-) im Falle eines erkannten Erdschlussfehlers (10) permanent geöffnet wird, wenn eine Zwischenkreisspannung ($V_{ZK}$) des Gleichspannungszwischenkreises (6) oder eine Spannung an einem Zwischenkreiskondensator ($C_{ZK}$) des Gleichspannungszwischenkreises (6) einen vorgegebenen Grenzwert erreicht.

10. Verfahren nach Anspruch 7, **dadurch gekennzeichnet, dass** parallel zum unidirektionalen Schaltelement (DT1) in der positiven Verbindungsleitung (V+) ein weiterer unidirektional leitender Halbleiterschalter (T1) angeordnet wird, der die positive Verbindungleitung (V+) bei offenem unidirektional leitenden Halbleiterschalter (T1) unterbricht und bei geschlossenem unidirektional leitenden Halbleiterschalter (T1) in der ersten Stromflussrichtung sperrt und entgegen der ersten Stromflussrichtung leitend durchschaltet und/oder parallel zum unidirektionalen Schaltelement (DT2) in der negativen Verbindungsleitung (V-) ein weiterer unidirektional leitender Halbleiterschalter (T2) angeordnet wird, der die negative Verbindungleitung (V-) bei offenem unidirektional leitenden Halbleiterschalter (T2) unterbricht und bei geschlossenem unidirektional leitenden Halbleiterschalter (T2) in der zweiten Stromflussrichtung sperrt und entgegen der zweiten Stromflussrichtung leitend durchschaltet, **dass** ein im Umrichter (1) fließender elektrischer Strom und/oder eine an einer Komponenten des Umrichters (1) anliegende elektrische Spannung erfasst wird und anhand des erfassten elektrischen Stromes und/oder der erfassten elektrischen Spannung ein Erdschlussfehler (10) erkannt wird, **und dass** der weitere unidirektional leitende Halbleiterschalter (T1) in der positiven Verbindungsleitung (V+) und/oder der weitere unidirektional leitende Halbleiterschalter (T2) in der negativen Verbindungsleitung (V-) im Falle eines erkannten Erdschlussfehlers (10) permanent geöffnet wird.

11. Verfahren nach Anspruch 8, 9 oder 10, **dadurch gekennzeichnet, dass** der der weitere unidirektional leitende Halbleiterschalter (T1) in der positiven Verbindungsleitung (V+) und/oder der weitere unidirektional leitende Halbleiterschalter (T2) in der negativen Verbindungsleitung (V-) im Falle eines erkannten Erdschlussfehlers (10) zumindest solange geöffnet wird, solange es dauert, ein Trennelement (14) des Umrichters (1), das den Umrichter (1) von einem am AC-Anschluss (2) angeschlossenen AC-Netz (5) trennt, zu öffnen.

Fig. 1

Fig. 2

Fig. 3

Fig. 4

Europäisches Patentamt
European Patent Office
Office européen des brevets

# EUROPÄISCHER RECHERCHENBERICHT

Nummer der Anmeldung

EP 24 15 9376

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2024/023203 A1 (FRAUNHOFER GES FORSCHUNG [DE]) 1. Februar 2024 (2024-02-01) * Seite 10, Zeilen 13-31; Abbildung 8 * * Seite 11, Zeile 1 - Seite 12, Zeile 8; Abbildung 9 * - - - - - | 1,4-7, 10,11 | INV. H02M1/00 H02H3/16 H02M1/32 H02M3/155 H02M3/158 H02M7/04 H02M7/487 |
| X | US 2021/305832 A1 (KAWAMOTO SHINYA [JP] ET AL) 30. September 2021 (2021-09-30) * Absatz [0015] - Absatz [0031]; Abbildung 1 * - - - - - | 1,7 | |
| X | JP 2008 141886 A (YASKAWA ELECTRIC CORP) 19. Juni 2008 (2008-06-19) * Absatz [0002]; Abbildung 4 * - - - - - | 1,7 | |
| A | US 2016/218512 A1 (TENCA PIERLUIGI [DE] ET AL) 28. Juli 2016 (2016-07-28) * Zusammenfassung * * Absatz [0015] - Absatz [0022]; Abbildungen 2, 3 * * Absätze [0026], [0027]; Abbildung 5 * - - - - - | 1-11 | |

RECHERCHIERTE SACHGEBIETE (IPC)

H02M
H02H

Der vorliegende Recherchenbericht wurde für alle Patentansprüche erstellt

| Recherchenort | Abschlußdatum der Recherche | Prüfer |
|---|---|---|
| Den Haag | 17. Juli 2024 | van Wesenbeeck, R |

**ANHANG ZUM EUROPÄISCHEN RECHERCHENBERICHT**
**ÜBER DIE EUROPÄISCHE PATENTANMELDUNG NR.**

EP 24 15 9376

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2024

| Im Recherchenbericht angeführtes Patentdokument | Datum der Veröffentlichung | Mitglied(er) der Patentfamilie | Datum der Veröffentlichung |
|---|---|---|---|
| WO 2024023203 A1 | 01-02-2024 | DE 102022207897 A1 | 01-02-2024 |
| | | WO 2024023203 A1 | 01-02-2024 |
| US 2021305832 A1 | 30-09-2021 | JP 6972379 B2 | 24-11-2021 |
| | | JP WO2020100256 A1 | 02-09-2021 |
| | | US 2021305832 A1 | 30-09-2021 |
| | | WO 2020100256 A1 | 22-05-2020 |
| JP 2008141886 A | 19-06-2008 | KEINE | |
| US 2016218512 A1 | 28-07-2016 | BR 102016001451 A2 | 13-09-2016 |
| | | CA 2917611 A1 | 23-07-2016 |
| | | CN 105826915 A | 03-08-2016 |
| | | EP 3048689 A1 | 27-07-2016 |
| | | US 2016218512 A1 | 28-07-2016 |

EPO FORM P0461

Für nähere Einzelheiten zu diesem Anhang : siehe Amtsblatt des Europäischen Patentamts, Nr.12/82